(19) Europäisches Patentamt
European Patent Office
Office européen des brevets

(11) **EP 1 935 859 A1**

(12) **DEMANDE DE BREVET EUROPEEN**

(43) Date de publication:
    **25.06.2008 Bulletin 2008/26**

(51) Int Cl.:
    ***C03C 17/245*** *(2006.01)*    ***C03C 17/25*** *(2006.01)*
    ***C03C 17/36*** *(2006.01)*

(21) Numéro de dépôt: **06126397.6**

(22) Date de dépôt: **18.12.2006**

(84) Etats contractants désignés:
    **AT BE BG CH CY CZ DE DK EE ES FI FR GB GR HU IE IS IT LI LT LU LV MC NL PL PT RO SE SI SK TR**
    Etats d'extension désignés:
    **AL BA HR MK RS**

(71) Demandeur: **AGC Flat Glass Europe SA**
    **1170 Bruxelles (BE)**

(72) Inventeur: **La désignation de l'inventeur n'a pas encore été déposée**

(74) Mandataire: **Decamps, Alain René François et al**
    **AGC Flat Glass Europe SA**
    **Intellectual Property Department**
    **R&D Centre**
    **Rue de l'Aurore, 2**
    **6040 Jumet (BE)**

(54) **Panneau revêtu éléctro conducteur**

(57)    Panneau lumineux comprenant un substrat rigide enduit d'un revêtement électro conducteur transparent comprenant une structure électro conductrice qui alimente des diodes électroluminescentes (LEDs) et qui présente un voile en transmission de plus de 5%.

EP 1 935 859 A1

## Description

La présente invention concerne un panneau lumineux comprenant un substrat rigide enduit d'un revêtement électro conducteur transparent comprenant une structure électro conductrice qui alimente des diodes électroluminescentes (LEDs). L'invention s'adresse à un panneau lumineux dont le revêtement présente un voile ("haze") en transmission dépasse 5%.

On connaît un dispositif d'éclairage comprenant un panneau de support transparent en verre revêtu de bandes conductrices de l'électricité sur lesquelles sont montées des diodes électroluminescentes émettant leur lumière au travers du support transparent (brevet US 6,270,236 B1).

Ce dispositif connu apparaît toutefois comme un panneau formé d'une multitude de points lumineux très brillants au droit des diodes luminescentes séparées par des zones noires ou très sombres. Il en résulte un effet peu propice à l'utilisation du panneau dans les applications d'éclairage ou de décoration.

L'invention remédie à cet inconvénient en fournissant un panneau lumineux comprenant une multitude de LED's générant des radiations lumineuses dont la densité des radiations est bien répartie sur l'ensemble de la surface éclairante du panneau.

A cet effet, l'invention concerne un panneau lumineux tel que défini dans la revendication 1.

Les revendications dépendantes définissent d'autres formes possibles de réalisation de l'invention, dont certaines sont préférées.

Outre la forte diminution, voire l'absence d'effet d'éblouissement déjà mentionné, l'invention peut aussi apporter un ou plusieurs des avantages suivants :

meilleure répartition de la densité du rayonnement sur l'étendue de la surface éclairante du panneau ;

possibilité de réduction du nombre de composants émetteurs de radiations ;

simplification du système d'alimentation électrique des composants ;

amélioration de l'esthétique du panneau.

Le panneau lumineux selon l'invention comprend un substrat rigide. Par substrat rigide on entend ici un corps plein de forme plate, c'est-à-dire de faible épaisseur comparée à ses autres dimensions et de résistance mécanique aux sollicitations de flexion et de torsion suffisante pour ne pas se déformer sous l'action de sollicitations extérieures que l'on rencontre couramment dans le milieu ambiant dans lequel on utilise généralement le panneau. En particulier, les substrats rigides utilisés résistent généralement bien au vent, et aux intempéries en général, que l'on rencontre dans les milieux d'utilisation de ces panneaux, y compris la glace et la neige. Le substrat peut se présenter sous la forme d'une plaque rigide constituée d'un matériau unique ou au contraire être le résultat d'un assemblage de plusieurs feuilles ou plaques du même matériau ou de matériaux différents collés ou soudés les uns aux autres. Des exemples sont des plaques métalliques, des plaques en céramique, en bois, en matière plastique ou en verre. Les matières transparentes aux longueurs d'ondes du spectre de la lumière visible sont préférées. Parmi celles-ci, les verres inorganiques traditionnels sont préférés, en particulier les verres sodo-calciques. De préférence, le substrat comprend au moins une feuille de verre.

Selon l'invention, le revêtement présente un voile en transmission de plus de 5%. Le voile d'un milieu transparent est mesuré en transmission de la lumière et est directement lié à la diffusion de la lumière dans les directions autres que celles du rayonnement lumineux incident. On prend par conséquent souvent la mesure de transmission diffuse pour une estimation du voile d'un milieu transparent revêtu d'une couche réfléchissante. Des panneaux ayant un coefficient de transmission diffuse $T_{vd}$ de 5 à 99,8 % sont préférés. Plus préférés encore sont les panneaux présentant une transmission diffuse $T_{vd}$ de 20 à 99 %.

On mesure le coefficient de transmission diffuse avec un spectrophotomètre équipé d'une sphère d'intégration. Un spectrophotomètre de type Perkin-Elmer® 900 a donné d'excellents résultats. Le panneau dont le voile doit être mesuré est appliqué tangentiellement sur la sphère de façon à obturer une petite ouverture de sa surface. Un rayon incident monochromatique délivré par un dispositif monochromateur du spectrophotomètre est dirigé vers l'échantillon à mesurer obturant l'ouverture dans la sphère, selon une perpendiculaire à la surface de l'échantillon. Une ouverture opposée dans la sphère située dans la direction de la direction de la lumière incidente permet la sortie du rayon lumineux transmis à travers le panneau échantillon, la sphère piégeant tous les rayons lumineux diffus réfléchis dans toute autre direction. Un capteur photoélectrique situé ailleurs sur la surface de la sphère mesure sous un angle d'observation de 10° la lumière monochromatique diffuse totale intégrée par la sphère. Le coefficient de transmission diffuse Tvd est alors calculé comme suit, en intégrant l'ensemble des lumières diffuses monochromatiques sur la totalité de la gamme des longueurs d'onde du spectre visible :

$$T_{vd} = \frac{\sum\limits_{\lambda=380}^{780nm} T_{vd}(\lambda) * V(\lambda) * D65(\lambda)}{\sum\limits_{\lambda=380}^{780nm} V(\lambda) * D65(\lambda)}$$

où,

$T_{vd}(\lambda)$ est la lumière diffuse spectrale totale,

$V(\lambda)$ est la sensibilité lumineuse spectrale d'un oeil humain moyen

et $D65(\lambda)$ est la distribution spectrale relative de l'illuminant normalisé "D65".

Selon l'invention, le revêtement comprend une structure électro conductrice transparente à la lumière visible. Par structure électro conductrice on entend une couche électro conductrice du type pyrolytique ou obtenue par pulvérisation cathodique magnétron sous vide ("magnetron sputtering").

Dans un premier mode de réalisation de l'invention, la couche électro conductrice est une couche pyrolytique déposée sur la surface du verre à des températures allant de 500 à 750 °C. De préférence, la couche pyrolytique conductrice a été déposée à des températures de 570 à 660 °C. Une couche de ce type peut être déposée directement sur le ruban de verre chaud, à la sortie de l'étape dans laquelle le verre fondu flotte à la surface d'un bain d'étain métallique liquide, dans le procédé de fabrication bien connu du verre flotté ("float glass"). Le dépôt peut être fait par pulvérisation (spray) de fines gouttes de liquide ou par dépôt chimique en phase vapeur. Avantageusement, la couche pyrolytique est une couche déposée chimiquement en phase vapeur. Généralement, la nature de cette couche pyrolytique est essentiellement du $SnO_2$ dopé avec du fluor et/ou de l'antimoine. Une couche pyrolytique consistant essentiellement en $SnO_2$ dopé avec du fluor a donné d'excellents résultats. L'épaisseur de cette couche pyrolytique doit être adaptée soigneusement afin de fournir une résistance électrique de surface adéquate. Des épaisseurs de la couche pyrolytique devraient avantageusement se situer de 250 à 500 nm. Une épaisseur d'environ 300 nm a donné d'excellents résultats. La résistance de surface d'une couche conductrice adaptée à l'invention se situe de 1 à 50 Ω/□. De préférence, cette résistance est de 1 à 15 Ω/□. Des résistances de surface de 1,5 à 12 Ω/□ ont donné d'excellents résultats.

Lorsqu'elle est appliquée sur du verre clair (4 mm d'épaisseur), la transmission lumineuse d'une telle couche conductrice pyrolytique n'est généralement pas inférieure à 50 % et, de préférence, pas inférieure à 75 %, la mesure étant faite sous illuminant standardisé D65 par la CIE (Commission Internationale de l'Eclairage) et avec un angle solide de 2°. Des couches fournissant une transmission lumineuse de 76 à 79 % ont donné d'excellents résultats.

Dans ce mode de réalisation, la couche conductrice a une rugosité totale de surface de 20 à 40 nm et, de préférence, de 20 à 30 nm. Par rugosité totale de surface ($R_t$) on entend la somme de la plus grande hauteur des protubérances ($R_{prot}$) et de la plus grande profondeur des puits ($R_{pit}$) mesurée à l'aide d'un microscope à force atomique. Ce dernier délivre des hauteurs individuelles $h_{ij}$ pour chaque point de la surface selon deux directions perpendiculaires i et j. $R_t$ peut être calculé comme suit :

$$R_t = R_{prot} + R_{pit}$$

où :

$$R_{prot} = \left| \max_{i,j}\{h_{ij} - h_{moy}\} \right|$$

$$R_{pit} = \left| \min_{i,j}\{h_{ij} - h_{moy}\} \right|$$

$$h_{moy} = \frac{1}{N} \sum_i \sum_j h_{ij}$$

N étant le nombre total de mesures.

Toute méthode connue peut être utilisée pour réaliser cette rugosité de surface. De bons résultats ont été obtenus avec un verre "float" revêtu d'une couche électro conductrice qui a été polie mécaniquement à l'aide d'abrasifs pendant le temps nécessaire à l'obtention de la rugosité désirée.

Dans un deuxième mode de réalisation de l'invention, la couche électro conductrice est une couche obtenue par pulvérisation cathodique magnétron sous vide ("magnetron sputtering"). Par exemple, la couche peut être une couche tendre constituée d'un empilage des couches élémentaires suivantes :

$TiO_2$ /ZnO / Ag / Ti / ZnO / $SnO_2$

La résistance de surface de ces couches tendres est généralement de 1 à 20 $\Omega/\square$ et, de préférence de 1 à 10 $\Omega/\square$. Une valeur de résistance de surface de 5 $\Omega/\square$ a donné d'excellents résultats.

Lorsqu'elle est appliquée sur du verre clair (4 mm d'épaisseur), la transmission lumineuse d'une telle couche conductrice n'est généralement pas inférieure à 40 % et, de préférence, pas inférieure à 80 %, la mesure étant faite sous illuminant standardisé D65 par la CIE (Commission Internationale de l'Eclairage) et avec un angle solide de 2°.

La couche conductrice magnétron peut aussi être constituée d'un empilage qui comprend une couche électro conductrice Zn dopé Al ou encore une couche In dopé Sn (couche "ITO"). La résistance de surface de ces couches est d'environ 4 à 50 $\Omega/\square$ et, de préférence d'environ 4 à 15 $\Omega/\square$.

La transmission lumineuse d'une telle couche conductrice appliquée sur du verre clair (4 mm d'épaisseur) n'est généralement pas inférieure à 80 % et, de préférence 84 %, la mesure étant faite sous illuminant standardisé D65 par la CIE (Commission Internationale de l'Eclairage) et avec un angle solide de 2°.

On préfère généralement les couches pyrolytiques aux couches magnétron, en raison de leur résistance mécanique à la rayure plus élevée.

Dans un des modes de réalisation décrit plus haut, il est avantageux que les connecteurs électriques d'alimentation de chaque LED soient en contact avec la structure électro conductrice. Dans ce mode de réalisation, on préfère que des zones faisant office de pistes d'amenée et d'évacuation du courant électrique aient été isolées du reste de la structure électro conductrice par de fines bandes isolantes découpées dans celle-ci. Ces bandes isolantes ont pu, par exemple être réalisées par l'action ablatrice d'un rayon laser sur la couche. Ces bandes isolantes peuvent être quasi invisibles à l'oeil nu. Avantageusement, la largeur d'une bande isolante est inférieure à 150 $\mu$m, de préférence inférieure à 100 $\mu$m. De manière particulièrement préférée, ces bandes ont une largeur inférieure à 50 $\mu$m et de manière la plus préférée, inférieure à 10 $\mu$m.

**Revendications**

1. Panneau lumineux comprenant un substrat rigide enduit d'un revêtement électro conducteur transparent comprenant une structure électro conductrice qui alimente des diodes électroluminescentes (LEDs), **caractérisé en ce que** le revêtement présente un voile en transmission de plus de 5%.

2. Panneau lumineux selon la revendication précédente, **caractérisé en ce que** la structure électro conductrice est du type pyrolitique ou magnétron sous vide.

3. Panneau lumineux selon la revendication précédente, **caractérisé en ce que** la structure électro conductrice est du type pyrolitique déposé par spray de liquide ou par la technique CVD.

4. Panneau lumineux selon la revendication précédente, **caractérisé en ce que** le revêtement présente une rugosité de surface de 20 à 40 nm.

5. Panneau lumineux selon la revendication 2, **caractérisé en ce que** la structure électro conductrice est obtenue par pulvérisation cathodique magnétron sous vide ("magnetron sputtering").

6. Panneau lumineux selon une quelconque des revendications précédentes, **caractérisé en ce que** la transmission lumineuse de la structure électro conductrice est d'au moins 84 % lorsqu'elle est appliquée sur un verre clair de 4 mm d'épaisseur, la mesure étant faite sous illuminant normalisé D65, avec un angle solide de 2 degrés.

7. Panneau lumineux selon une quelconque des revendications précédentes, **caractérisé en ce que** le substrat comprend au moins une feuille de verre.

8. Panneau lumineux selon une quelconque des revendications précédentes, **caractérisé en ce que** les connecteurs électriques d'alimentation des LEDs sont en contact avec la structure électro conductrice.

9. Panneau lumineux selon une quelconque des revendications précédentes, **caractérisé en ce que** des zones faisant office de pistes d'amenée et d'évacuation du courant électrique ont été isolées du reste de la structure électro conductrice par de fines bandes isolantes découpées dans celle-ci.

10. Panneau lumineux selon une quelconque des revendications précédentes, **caractérisé en ce que** la structure électro conductrice présente une résistance de surface de 1 à 15 $\Omega/\square$.

**DECLARATION**

**Office européen**

**des brevets**

qui selon la règle 45 de la Convention sur le brevet européen est considerée, aux fins de la procédure ultérieure, comme le rapport de la recherche européenne

Numéro de la demande

EP 06 12 6397

| La division de la recherche estime que la présente demande de brevet n'est pas conforme aux dispositions de la CBE au point qu'une recherche significative sur l'état de la technique ne peut être effectuée au regard de toutes les revendications | CLASSEMENT DE LA DEMANDE (IPC) |
|---|---|
| Raison : | INV. C03C17/245 C03C17/25 C03C17/36 |

La demande ne remplit pas les conditions de l'Art. 83 CBE car la divulgation de l'invention n'est pas suffisante pour que l'homme de métier puisse être en mesure d'obtenir un panneau lumineux présentant un voile en transmission de plus de 5%, tel que décrit dans la revendication indépendante 1.
En effet, la description n'indique pas comment calculer le voile, mais donne une méthode pour calculer la transmission diffuse, qui est une estimation du voile (cf page 2, lignes 24-28). La description donne deux exemples, mais ne donne la valeur du voile (ou de la transmission diffuse) ni pour l'un ni pour l'autre.
Il semble donc impossible pour l'homme de métier d'arriver à obtenir un panneau lumineux avec un voile de plus de 5% (cf Directives C-II, 4.9 et 4.10).
De plus, les conditions de l'Art. 84 CBE ne sont pas remplies non plus car le paramètre définissant principalement l'objet de la revendication 1 ne peut pas être déterminé de façon sûre d'après la demande, on peut seulement en estimer la valeur par le biais d'un autre paramètre: la transmission diffuse. De plus, il n'est pas possible d'effectuer une comparaison significative avec l'état de la technique car la mesure de l'estimation de ce paramètre nécessite le calcul d'une formule complexe (cf page 3) (Directives C-III, 4.7a).

L'attention du déposant est attirée sur le fait que, suite à une déclaration conformément à la Règle 45 CBE, une recherche pourrait être effectuée pendant
-/--

| Lieu de la recherche | Date | Examinateur |
|---|---|---|
| La Haye | 16 mai 2007 | Picard, Sybille |

EPO FORM 1504 (P04C38)

**Office européen**

**des brevets**

**DECLARATION**

qui selon la règle 45 de la Convention sur le brevet européen est considerée, aux fins de la procédure ultérieure, comme le rapport de la recherche européenne

Numéro de la demande

EP 06 12 6397

| La division de la recherche estime que la présente demande de brevet n'est pas conforme aux dispositions de la CBE au point qu'une recherche significative sur l'état de la technique ne peut être effectuée au regard de toutes les revendications | CLASSEMENT DE LA DEMANDE (IPC) |
|---|---|
| Raison : | |

la phase d'examen, à condition que les problèmes ayant conduit à cette déclaration de non-recherche ou de recherche incomplète aient été résolus (voir Directives OEB C-VI, 8.5).
-----

| Lieu de la recherche | Date | Examinateur |
|---|---|---|
| La Haye | 16 mai 2007 | Picard, Sybille |

EPO FORM 1504 (P04C38)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6270236 B1